(19) Europäisches Patentamt
European Patent Office
Office européen des brevets

(11) Numéro de publication : 0 343 086 B1

(12) # FASCICULE DE BREVET EUROPEEN

(45) Date de publication du fascicule du brevet : **30.12.92 Bulletin 92/53**

(51) Int. Cl.$^5$ : **C07F 7/22,** C08G 18/24

(21) Numéro de dépôt : **89420137.5**

(22) Date de dépôt : **18.04.89**

(54) **Composés d'étain utilisables notamment comme catalyseurs latents pour la préparation de polyuréthannes.**

(30) Priorité : **21.04.88 FR 8805554**

(43) Date de publication de la demande : **23.11.89 Bulletin 89/47**

(45) Mention de la délivrance du brevet : **30.12.92 Bulletin 92/53**

(84) Etats contractants désignés : **AT BE CH DE ES FR GB GR IT LI LU NL SE**

(56) Documents cités :
**FR-A- 1 435 756**
**US-A- 3 206 489**

(73) Titulaire : **RHONE-POULENC CHIMIE**
**25, quai Paul Doumer**
**F-92408 Courbevoie Cédex (FR)**

(72) Inventeur : **Frances, Jean-Marc**
**9, avenue Condorcet**
**FR-69100 Villeurbanne (FR)**
Inventeur : **Gouron, Véronique**
**E4 - Appartement 396 Hameau de Noailles**
**F-33400 Talence (FR)**
Inventeur : **Jousseaume, Bernard**
**3, Clos du Haut Carré**
**F-33400 Talence (FR)**
Inventeur : **Pereyre, Michel**
**45, rue du Haut-Carré**
**F-33400 Talence (FR)**

(74) Mandataire : **Fabre, Madeleine-France et al**
**RHONE-POULENC CHIMIE Direction des Brevets Secteur Spécialités Chimiques 25, quai Paul-Doumer**
**F-92408 Courbevoie Cédex (FR)**

EP 0 343 086 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne des composés d'étain tétracoordinés utilisables notamment comme catalyseurs latents.

On a déjà proposé de nombreux composés de l'étain utilisés comme catalyseurs en particulier pour :

- la synthèse de polyuréthanne : on peut par exemple citer les chélates d'étain (US-A-3 055 845) et les produits de réaction entre un carboxylate d'étain (IV) avec un sulfonylisocyanate (DE-A-3 326 566 et EP-A-232 541),
- la réticulation de polymères silicones par réaction de polycondensation : on peut par exemple citer les dicarboxylates de dialkylétain tels que les dicarboxylates de dialkylétain (NOLL "Chemistry and Technology of Silicones", page 337, Academic Press, 1968 -2ème edition), et les bischélates de dialkylétain (EP-A-147 323 et US-A-4 517 337).

La présente invention a pour but de proposer une nouvelle classe de composés d'étain tétracoordinés qui soient d'une part inactifs à température ambiante (environ 20 °C), notamment pour les deux applications indiquées ci-dessus et qui se transforment en espèces actives par élévation de température.

Ce type de composés est usuellement dénommé catalyseur latent.

Les catalyseurs latents selon l'invention répondent à la formule générale :

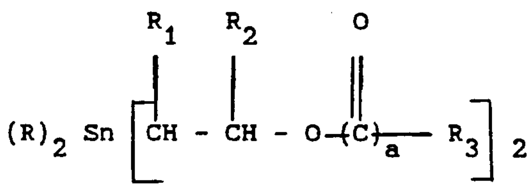

(1)

dans laquelle :

- les radicaux R, identiques ou différents, sont choisis parmi un radical alkyle linéaire ou ramifié en $C_1$-$C_{20}$, un radical aryle mononucléaire, arylalkyle et alkylaryle, dont la partie alkyle est en $C_1$-$C_6$,
- les radicaux $R_1$ et $R_2$, identiques ou différents, sont choisis parmi un atome d'hydrogène, un radical cyano, un radical alkyle en $C_1$-$C_6$, un radical alcoxycarbonyle dont la partie alkyle est en $C_1$-$C_6$, et $R_1$ et $R_2$ peuvent former ensemble un cycle hydrocarboné saturé ayant de 5 à 8 atomes de carbone,
- le radical $R_3$ est choisi parmi un atome d'hydrogène, un radical alkyle en $C_1$-$C_{20}$ linéaire ou ramifié, un radical alcoxy en $C_1$-$C_{20}$ linéaire ou ramifié, un radical aryle mononucléaire et un radical aryloxy mononucléaire,
- a est 0 ou 1.

Dans le cadre de la présente invention les radicaux R, $R_1$, $R_2$ et $R_3$ préférés sont les suivants:

- R : butyle, octyle et phényle,
- $R_1$ : H,
- $R_2$ : H, méthyle et cyano,
- $R_3$ : H, méthyle, undécanoyle, éthyl-2 pentyle, nonyle et éthoxy,
- a = 1.

Les produits préférés répondant à la formule (1) sont les suivants :

- bis(acétoxy-2 éthyl) dibutylétain, formule (1) : R = butyle, $R_1 = R_2 = H$, $R_3$ = méthyle,
- bis(acétoxy-2 éthyl) dioctylétain, formule (1) : R = octyle, $R_1 = R_2 = H$, $R_3$ = méthyle,
- bis(lauroyloxy-2 éthyl) dibutylétain, formule (1) : R = butyle, $R_1 = R_2 = H$, $R_3$ = undécanoyle,
- bis(lauroyloxy-2 éthyl)dioctylétain, formule (1) : R = octyle, $R_1 = R_2 = H$, $R_3$ = undécanoyle,
- bis [(éthyl-2 hexanoyloxy)-2 éthyl] dibutylétain, formule (1) : R = butyle, $R_1 = R_2 = H$, $R_3$ = éthyl-2 pentyle,
- bis [(éthyl-2 hexanoyloxy)-2 éthyl] dioctylétain, formule (1) : R = octyle, $R_1 = R_2 = H$, $R_3$ = éthyl-2 pentyle,
- bis(décanoyloxy-2 éthyl) dibutylétain, formule (1) : R = butyle, $R_1 = R_2 = H$, $R_3$ = nonyle (dont le carbone en position 1 est quaternaire),
- bis(acétoxy-2 méthyl-2 éthyl) dibutylétain, formule (1) : R = butyle, $R_1$ = H, $R_2 = R_3$ = méthyle,
- bis(acétoxy-2 cyano-2 éthyl) dibutylétain, formule (1) : R = butyle, $R_1$ = H, $R_2$ = CN, $R_3$ = méthyle,
- bis(formyloxy-2 éthyl) dibutylétain, formule (1) : R = butyle, $R_1 = R_2 = R_3 = H$,
- bis(éthoxycarbonyloxy-2 éthyl) dibutylétain, formule (1) : R = butyle, $R_1 = R_2 = H$, $R_3$ = éthoxy,
- bis(acétoxy-2 éthyl) diphénylétain, formule (1) : R = phényle, $R_1 = R_2 = H$, $R_3$ = méthyle,
- bis(lauroyloxy-2 éthyl) diphénylétain, formule (1) : R = phényle, $R_1 = R_2 = H$, $R_3$ = undécanoyle.

Les composés de formule (1) peuvent être préparés par réaction d'addition d'un dihydrure de diorganoétain

de formule (2) :

$$(R)_2\,Sn\,H_2 \qquad (2)$$

dans laquelle les radicaux R, identiques ou différents, ont la même signification qu'à la formule (1) ci-dessus sur un carboxylate d'énol de formule (3) :

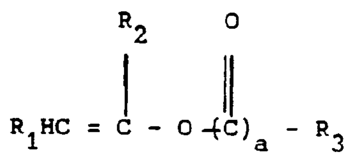

(3)

dans laquelle les radicaux $R_1$, $R_2$ et $R_3$ et a ont la même signification qu'à la formule (1) ci-dessus.

Les dihydrures de formule (2) sont, pour la plupart, connus et décrits dans la littérature. Dans le cas où ce sont des produits nouveaux, ils peuvent être obtenus par réduction du dichlorure de diorganoétain correspondant par l'hydrure de lithium-aluminium.

Un autre procédé consiste à réduire l'oxyde de diorganoétain correspondant par un polydiorganosiloxane porteur de fonction SiH comme par exemple un polyhydrogénométhylsiloxane bloqué à chaque extrémité par un groupe triméthylsilyle.

Les carboxylates et alcoolates de formule (3) sont, pour la plupart connus et décrits dans la littérature.

Ainsi par exemple, les carboxylates de vinyle de formule

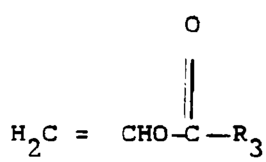

(formule (3) : $R_1 = R_2 = H$) sont obtenus par transestérification de l'acétate de vinyle sur l'acide $R_3COOH$ en milieu acide.

Les carboxylates d'énol de formule :

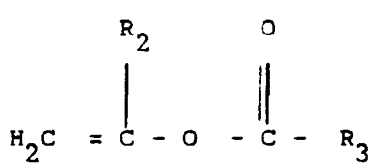

(formule (3) : $R_1 = H$, $R_3 = CH_3$) sont obtenus par réaction de la cétone $H_3C - COR_2$ sur l'acétate d'isopropényle en milieu acide.

La réaction d'hydrostannation d'un produit de formule (2) sur un produit de formule (3) est de préférence mise en oeuvre par réaction d'une mole de produit de formule (2) sur deux moles de produit de formule (3) à température ambiante au sein d'un solvant organique hydrocarboné tel que le cyclohexane. Le mélange réactionnel est soumis à un rayonnement U.V. (360 nm).

La réaction d'hydrostannation peut également être effectuée sans solvant en présence d'un générateur de radicaux libres comme par exemple en présence d'AIBN (azobisisobutyronitrile) à une température de 70-80 °C.

Les composés d'étain de formule (1), qui sont généralement des liquides à température ambiante, peuvent être identifiés par les techniques analytiques de spectroscopies I.R. (infra-rouge) et R.M.N. (résonance magnétique nucléaire $^{119}Sn$, $^{13}C$ et $^{1}H$) ainsi que par spectroscopie de masse et par la mesure de l'effet MOSSBAUER.

Il s'avère toutefois qu'en l'état actuel des connaissances des techniques analytiques, la méthode analytique R.M.N. $^{119}Sn$, telle que décrite, en particulier dans l'article de Peter J. SMITH "CHEMICAL SHIFTS OF $^{119}Sn$ NUCLEI IN ORGANOTIN COMPOUNDS", page 291 suivantes, publié dans ANNUAL REPORTS ON NMR SPECTROSCOPY, volume 8, 1978 ACADEMIC PRESS, est une méthode qui est à elle seule suffisamment précise pour caractériser les différents composés de l'étain présents au sein d'un mélange, en particulier

d'un mélange réactionnel, et pour permettre de trouver les formules chimiques de la plupart de ces composés.

Le paramètre fondamental évalué par la R.M.N. $^{119}Sn$ est la valeur du déplacement chimique exprimé en partie par millions relatif à une référence (généralement le tétraméthylétain).

La valeur du déplacement chimique $\delta$ est notamment sensible à l'électronégativité des groupements portés par l'étain et à la variation du nombre de coordinence de l'atome d'étain. Des travaux spécifiques de caractérisation de dérivés organostanniques à partir de la R.M.N. $^{119}Sn$ sont notamment décrites par A.G. DAVIES et P.J. SMITH, COMPREHENSIVE ORGANO-METALLIC CHEMISTRY 11 TIN, pages 523 à 529 et par J. OTERA J. OF. ORGANOMET. CHEM. 221, pages 57-61 (1981).

Les composés de formule (1) sont stables à température ambiante et sont inactifs comme catalyseurs de préparation de polyuréthannes et comme catalyseurs de durcissement de compositions organopolysiloxanes.

Par contre les produits de formule (1) soumis à une élévation de température se décomposent thermiquement en composés bien connus à savoir les diorganodicarboxylates d'étain ou les diorganodialcoolates d'étain correspondants avec dégagement du composé organique à insaturation alcénique correspondant suivant l'équation :

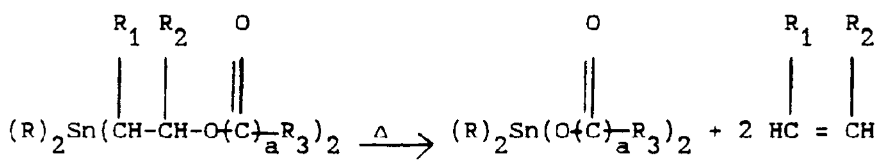

La décomposition thermique des produits de formule (1) intervient à une température spécifique à chacun des produits. Cette température est généralement comprise entre 50 et 250 °C.

Dans le cas où $R_3$ est un radical alcoxy et a = 1, le dicarboxylate de diorganoétain formé se décompose en dialcoxydiorganoétain avec dégagement de $CO_2$.

Le diorganodicarboxylate ou diorganodialcoolate d'étain libéré est alors un catalyseur actif de préparation de polyuréthannes et de durcissement de compositions organopolysiloxanes.

L'avantage des catalyseurs latents de formule (1) est donc de pouvoir mélanger les produits de départ avec le catalyseur latent sans qu'il y ait catalyse de la réaction et de déclancher la catalyse de la réaction par chauffage du mélange à la température de décomposition du catalyseur latent.

Cette température de décomposition peut être abaissée par addition d'une quantité efficace d'un agent nucléophile choisi par exemple, parmi l'eau, une amine organique secondaire, un alcool organique, un composé organosilicé à fonction silanol et un composé organique à fonction mercapto (SH). Par quantité efficace on entend de 0,001 mole à 10 moles ou plus d'agent nucléophile par mole de composé de formule (1).

La présente invention vise donc également un procédé de préparation de polyuréthanne selon lequel on mélange à température ambiante un polyisocyanate organique, un composé organique contenant au moins deux groupes à hydrogène actif et une quantité catalytiquement efficace d'un catalyseur latent de formule (1) et on porte le mélange au moins à la température de décomposition thermique du catalyseur latent.

Le catalyseur latent est utilisé à une teneur de 0,001 à 6 parties, de préférence de 0,01 à 3 parties en poids, calculées en poids d'étain métal pour 100 parties en poids des extraits secs des réactifs de départ.

Les polyisocyanates et les composés organiques contenant au moins deux groupes à hydrogène actif sont bien connus de l'homme de métier. Ils sont par exemple décrits dans US-A-3 055 845 et EP-A-232 541 cités comme référence.

La durée de "vie en pot" du mélange réactionnel est identique qu'il y ait ou qu'il n'y ait pas au sein dudit mélange un catalyseur latent de formule (1). Cette durée de "vie en pot" est au moins six fois supérieure à celle que l'on observe sur un mélange réactionnel comportant une quantité équimolaire du catalyseur actif correspondant à celui obtenu par décomposition du catalyseur latent de formule (1).

La catalyse est déclenchée dès que l'on porte le mélange réactionnel à une température au moins égale à la température de décomposition du catalyseur latent. La réactivité observée est alors similaire à celle obtenue par l'utilisation d'une quantité équimolaire du catalyseur actif correspondant.

Dans ce qui suit ou ce qui précède, sauf mentions contraires, les pourcentages et parties sont en poids.

Les exemples suivants illustrent l'invention sans en limiter la portée.

- EXEMPLE 1 :

Préparation et décomposition du bis(acétoxy-2 éthyl)dibutylétain:

a) - Préparation du dihydrure de dibutylétain: $(C_4H_9)_2$ Sn $H_2$

Dans un ballon de 1 litre à trois tubulures, on introduit 10,35 g d'hydrure de lithium-aluminium sur lequel on ajoute goutte-à-goutte 250 ml d'éther anhydre sous azote et avec agitation magnétique. 52,1 g de dichlorure de dibutylétain, dissous dans 100 ml d'éther anhydre, sont ensuite ajoutés goutte-à-goutte. La réaction est exothermique. A la fin de l'addition, le mélange réactionnel est porté à reflux pendant 2 heures 30.

Ensuite, 500 mg d'hydroquinone et 100 ml de pentane sont ajoutés successivement. Le mélange est alors refroidi à 0 °C puis hydrolysé lentement.

La phase organique est récupérée, séchée sur sulfate de magnésium. Les solvants sont éliminés sous un vide de 2,7 KPa à température ambiante.

Le dihydrure de dibutylétain est distillé sous un vide de 0,0013 KPa à 35 °C en tête de colonne.

Le rendement de la réaction est de 70 % en dihydrure de dibutylétain :

$(C_4H_9)_2$ Sn $H_2$ Eb = 35 °C sous 0,0013 KPa

Caractéristiques spectrales :

RMN$^1$H (pur) δ (ppm) = 4,6 (2 H, m) ; 1,65 - 0,9 (18 H, m)
RMN $^{119}$Sn ($C_6D_6$, $(CH_3)_4$Sn interne) δ = 204,0 ppm ;
$|^1J(SnH)|$ = 1676 Hz ; $|^2J(SnH)|$ = 56 Hz
IR (film) : ν(SnH) = 1840 $cm^{-1}$ (F)

b) - Préparation du bis(acétoxy-2 éthyl)dibutylétain:

Dans une cuve en pyrex ® thermostatée à 25 °C, sont placés 2,349 g (0,01 mole) de dihydrure de dibutylétain, 1,722 g (0,02 mole) d'acétate de vinyle distillé, et 2 g de cyclohexane anhydre. La solution est exposée aux rayons ultraviolets pendant 3 heures. Le cyclohexane est ensuite éliminé sous vide à température ambiante. Le produit attendu est obtenu pur avec un rendement quantitatif.

Ce mode opératoire est le même dans tous les cas d'addition du dihydrure de dibutylétain sur un composé insaturé. Seuls peuvent varier la température et le temps d'exposition.

Le produit obtenu a la formule suivante :

$$(C_4H_9)_2Sn(CH_2CH_2OCOCH_3)_2$$

Caractéristiques spectrales :

RMN $^1$H ($CCl_4$, TMS int) δ (ppm) = 4,7 - 3,75 (4 H, m) ; 1,95 (6 H, s) ; 1,7 - 0,9 (22 H, m)
RMN$^{119}$Sn ($C_6D_6$, $(CH_3)_4$Sn interne) δ = - 19,8 ppm ;
IR (film) : ν(CO) = 1740 $cm^{-1}$ (F)

c) - Décomposition du bis(acétoxy-2 éthyl)dibutylétain:

1,84 g de bis(acétoxy-2 éthyl)dibutylétain sont placés dans un tube à essai relié à une cuve à eau. Le tube est placé dans un bain d'huile thermostaté à 100 °C. Au bout de 2 heures 30, 200 $cm^3$ de gaz sont récupérés et identifiés par spectroscopie IR ; le spectre de ce gaz est identique à celui de l'éthylène (bande caractéristique fine et intense à 950 $cm^{-1}$). Le liquide issu de la décomposition du produit de départ (1,59 g) est distillé sous un vide de 0,013 KPa à 90 °C en tête de colonne. Le produit obtenu est le diacétate de dibutylétain de formule :

$(C_4H_9)_2$ $Sn(OCOCH_3)_2$ Eb = 90 °C sous 0,013 KPa

Caractéristiques spectrales :

RMN $^1$H ($CCl_4$, TMS int) δ (ppm) = 2,0 (6 H, s) ; 1,65 - 0,9 (18 H, m)
RMN $^{119}$Sn ($C_6D_6$, $(CH_3)_4$Sn interne) δ = - 156,3 ppm ;
IR (film) : ν(CO) = 1605 ; 1570 ; 1425 $cm^{-1}$ (F)

- EXEMPLE 2 :

Préparation et décomposition du bis(acétoxy-2 éthyl)dioctylétain:

Cette préparation nécessite la synthèse préalable du dihydrure de dioctylétain $(C_8H_{17})_2$ Sn $H_2$.

a) - Préparation du dihydrure de dioctylétain :

Le mode opératoire suivi est le même que celui utilisé à l'exemple 1 pour la synthèse du dihydrure de dibutylétain, sauf que l'on part de dichlorure de dioctylétain.

Le produit est obtenu pur après distillation au kugelrohr, sous un vide de $2.10^{-2}$ KPa, à 90 °C (température du four).

Caractéristiques spectrales :

RMN$^1$H (pur) δ (ppm) = 4,6 (2 H, m) ; 1,65 - 0,9 (34 H, m).

b) - Préparation du bis(acétoxy-2 éthyl)dioctylétain:

Le produit est obtenu de la même façon que son homologue en série dibutylée : le bis(acétoxy-2 éthyl)dibutylétain de l'exemple 1.

La formule du produit est la suivante :

$$(C_8H_{17})_2\ Sn\ [(CH_2CH_2OCOCH_3)]_2$$

Caractéristiques spectrales:

RMN $^1$H ($CCl_4$, TMS int) δ (ppm) = 4,65 - 3,7 (4 H, m) ; 1,95 (6 H, s) ; 1,65 - 0,9 (38 H, m)
RMN $^{119}$Sn ($C_6D_6$, $(CH_3)_4$ Sn interne) δ = - 20,4 ppm ;

c) - Décomposition du bis(acétoxy-2 éthyl)dioctylétain:

La décomposition du produit pur est terminée au bout de 3 heures à 110 °C.

Le produit obtenu est le diacétate de dioctylétain de formule :

$$(C_8H_{17})_2\ Sn\ (OCOCH_3)_2$$

Caractéristiques spectrales :

RMN $^1$H ($CCl_4$, TMS int) δ (ppm) = 2,0 - 0,9 (40 H, m) ;
RMN $^{119}$Sn ($C_6D_6$, $(CH_3)_4$ Sn interne) δ = - 156,8 ppm.

- EXEMPLE 3 :

Préparation et décomposition du bis(lauroyloxy-2 éthyl)dibutylétain:

a) - Préparation du laurate de vinyle:

Dans un ballon de 100 ml à deux tubulures, sont introduits 51,5 g d'acétate de vinyle et 20 g (0,1 mole) d'acide laurique. L'acide est dissous à chaud, 0,4 g d'acétate mercurique est ajouté sous courant d'azote. Le mélange est ainsi laissé sous agitation magnétique, 30 minutes, à température ambiante, sous azote. Deux gouttes d'acide sulfurique (95 %) sont alors ajoutées et le mélange réactionnel est porté à reflux pendant 3 heures. On le laisse ensuite revenir à température ambiante, puis on ajoute 0,21 g d'acétate de sodium.

L'excès d'acétate de vinyle est récupéré par distillation à pression atmosphérique.

Le laurate de vinyle est distillé sous vide de 0,013 KPa à 94 °C en tête de colonne.

Le produit est obtenu avec un rendement de 70 %. Sa formule est la suivante :

$H_2C = CHOCOC_{11}H_{23}$ Eb = 94 °C sous 0,013 KPa

Caractéristiques spectrales :

RMN $^1H$ ($CCl_4$, TMS int) δ (ppm) = 7,2 (1 H, dd) ; 4,75 (1 H, dd) ; 4,45 (1 H, dd) ; 2,3 (2 H, t) ; 1,9 - 0,9 (21 H, m).

b) - Préparation du bis(lauroyloxy-2 éthyl)dibutylétain:

Le mode opératoire suivi est le même qu'à l'exemple 1. L'acétate de vinyle est remplacé par 4,526 g (0,02 mole) de laurate de vinyle. La solution est exposée 4 heures aux rayons ultra-violets.

Le produit obtenu quantitativement, a la formule suivante :

$$(C_4H_9)_2\ Sn\ (CH_2CH_2OCOC_{11}H_{23})_2$$

Caractéristiques spectrales:

RMN $^1H$ ($CCl_4$, TMS int) δ (ppm) = 4,65 - 3,75 (4 H,m) ; 2,2 (4 H, t) ; 1,9 -0,9 (4H, m)
RMN $^{119}Sn$ ($C_6D_6$, $(CH_3)_4$ Sn interne) δ = - 20,0 ppm ;
IR (film) : ν(CO) = 1740 $cm^{-1}$ (F).

c) - Décomposition du bis(lauroyloxy-2 éthyl)dibutylétain:

La décomposition est faite comme à l'exemple 1. A 140 °C, elle est terminée au bout de 2 heures 30.

Le produit de décomposition est identifié comme étant le dilaurate de dibutylétain de formule :

$$(C_4H_9)_2\ Sn\ (OCOC_{11}H_{23})_2$$

Caractéristiques spectrales:

RMN $^1H$ ($CCl_4$, TMS int) δ (ppm) = 2,2 (4 H, t) ; 1,6 - 0,9 (60 H, m)
RMN $^{119}Sn$ ($C_6D_6$, $(CH_3)_4$ Sn interne) δ = - 152,5 ppm.

- EXEMPLE 4 :

Préparation et décomposition du bis(lauroyloxy-2 éthyl)dioctylétain:

a) - Préparation du bis(lauroyloxy-2 éthyl)dioctylétain:

Le produit est obtenu par hydrostannation du laurate de vinyle. La solution est exposée 7 heures aux rayons ultra-violets. Le produit a la formule suivante :

$$(C_8H_{17})_2\ Sn\ (CH_2CH_2OCOC_{11}H_{23})_2$$

Caractéristiques spectrales:

RMN $^1H$ ($CCl_4$, TMS int) δ (ppm) = 4,6 - 3,9 (4 H, m) ; 2,4 - 0,9 (84 H, m)
RMN $^{119}Sn$ ($C_6D_6$, $(CH_3)_4$ Sn interne) δ = - 20,6 ppm.

b) Décomposition du bis(lauroyloxy-2 éthyl)dioctylétain:

Elle se fait dans les mêmes conditions que celle du bis(lauroyloxy-2 éthyl)dibutylétain et conduit au dilaurate de dioctylétain :

$$(C_8H_{17})_2\ Sn\ (OCOC_{11}H_{23})_2$$

Caractéristiques spectrales:

RMN $^1H$ ($CCl_4$, TMS int) δ (ppm) = 2,4 - 0,9 (80 H, m).

- EXEMPLE 5 :

Préparation du bis [(éthyl-2 hexanoyloxy)-2 éthyl] dibutylétain:

a) - Préparation et décomposition du bis [(éthyl-2 hexanoyloxy)-2 éthyl] dibutylétain:

Dans un tube en pyrex®, sont placés 2,349 g (0,01 mole) de dihydrure de dibutylétain, 3,405 g (0,02 mole) d'éthyl-2 hexanoate de vinyle distillé et 2,5 g de cyclohexane anhydre. L'exposition aux rayons ultra-violets dure 8 heures 30 à 30-35 °C. Le solvant est éliminé sous vide à température ambiante.

Le produit de la réaction, obtenu quantitativement, est le suivant :

$$(C_4H_9)_2\ Sn\ [CH_2CH_2OCOCH(C_2H_5)(C_4H_9)]_2$$

Caractéristiques spectrales:

RMN $^1H$ ($CCl_4$, TMS int) $\delta$ (ppm) = 4,7 - 4 (4 H, m) ; 2,4 - 0,9 (52 H, m)
RMN $^{119}Sn$ ($C_6D_6$, $(CH_3)_4Sn$ interne) $\delta$ = - 20,9 ppm ;
IR (film) : ν(CO) = 1735 $cm^{-1}$(F).

b) - Décomposition du bis [(éthyl-2 hexanoyloxy)-2 éthyl] dibutylétain:

La décomposition est faite comme à l'exemple 1. Elle est terminée au bout de 5 heures à 140 °C. Le produit obtenu est identifié comme étant :

$$(C_4H_9)_2\ Sn\ [OCOCH(C_2H_5)(C_4H_9)]_2$$

Caractéristiques spectrales:

RMN $^1H$ ($CCl_4$, TMS int) $\delta$ (ppm) = 2,5 - 0,9 (48 H, m)
RMN $^{119}Sn$ ($C_6D_6$, $(CH_3)_4$ Sn interne) $\delta$ = - 154,9 ppm.

- EXEMPLE 6

Préparation et décomposition du bis [(éthyl-2 hexanoyloxy)-2 éthyl] dioctylétain:

a) - Préparation du bis (éthyl-2 hexanoyloxy)-2 éthyl dioctylétain:

L'addition du dihydrure de dioctylétain sur l'éthyl-2 hexanoate de vinyle se fait de la même façon que celle du dihydrure de dibutylétain (exemple 5).

Elle est totale au bout de 13 heures d'exposition du mélange réactionnel aux rayons ultra-violets.

Le produit obtenu quantitativement est de formule :

$$(C_8H_{17})_2\ Sn\ [CH_2CH_2OCOCH(C_2H_5)(C_4H_9)]_2$$

Caractéristiques spectrales:

RMN $^1H$ ($CCl_4$, TMS int) $\delta$ (ppm) = 4,7 - 4,0 (4 H, m) ; 1,6 - 0,9 (68 H, m)
RMN $^{119}Sn$ ($C_6D_6$, $(CH_3)_4Sn$ interne) $\delta$ = - 21,7 ppm.

b) - Décomposition du bis [(éthyl-2 hexanoyloxy)-2 éthyl] dioctylétain:

Elle a lieu dans les mêmes conditions que celles de l'homologue en série dibutylée (exemple 5).

Le produit de décomposition a la formule suivante :

$$(C_8H_{17})_2\ Sn\ [OCOCH(C_2H_5)(C_4H_9)]_2$$

Caractéristiques spectrales:

RMN $^{16}H$ ($CCl_4$, TMS int) $\delta$ (ppm) = 2,5 - 0,9 (64 H, m) ;
RMN $^{119}Sn$ ($C_6D_6$, $(CH_3)_4$ Sn interne) $\delta$ = - 157,9 ppm.

- EXEMPLE 7 :

Préparation et décomposition du bis(decanoyloxy-2 éthyl)dibutylétain: dénommé également bis(versatoyloxyl-2 éthyl)dibutylétain.

a) - Préparation du versatate de vinyle (dénommé également décanoate de vinyle) :

L'acide versatique ® 10 (Shell) est un mélange d'acides de formule brute $C_{10}H_{20}O_2$ dont au moins 98 % de la masse possède un atome de carbone quaternaire en position alpha de la fonction acide. Le radical $R_3$ de la formule (1) est donc assimilable à un radical nonyle.

Le mode opératoire est le même que pour la préparation du laurate de vinyle. Le versatate de vinyle est obtenu par distillation avec un rendement de 60 %.

$H_2C = CHOCOC_9H_{19}$ Eb = 100 °C sous 3,3 KPa.

Caractéristiques spectrales:

RMN $^1H$ ($CCl_4$, TMS int) δ (ppm) = 7,22 (1 H, dd) ; 4,78 (1 H, dd) ; 4,45 (1 H, dd) ; 2,0 - 0,8 (19 H, m).

b) - Préparation du bis(versatoyloxy-2 éthyl)dibutylétain :

On reprend le mode opératoire de l'exemple 1. La cuve est thermostatée à 0 °C. La solution est exposée aux rayons ultra-violets pendant 2 heures. Le produit attendu est obtenu quantitativement ; sa formule est la suivante :

$(C_4H_9)_2$ Sn $(CH_2CH_2OCOC_9H_{19})_2$

Caractéristiques spectrales :

RMN $^1H$ ($CCl_4$, TMS int) δ (ppm) = 4,5 - 4,0 (4 H, m) ; 2,0 - 0,8 (60 H, m)
RMN $^{119}Sn$ ($C_6D_6$, $(CH_3)_4Sn$ interne) δ = - 22,3 ppm ;
IR (film) : ν(CO) = 1730 $cm^{-1}$ (F).

c) - Décomposition du bis(versatoyloxy-2 éthyl)dibutylétain :

La décomposition est conduite comme à l'exemple 1. A 140 °C, 65 % du produit a disparu au bout de 4 heures (pourcentage estimé par RMN$^{119}$Sn). Le produit de décomposition est le diversatate de dibutylétain :

$(C_4H_9)_2$ Sn $(OCOC_9H_{19})_2$

Caractéristiques spectrales :

RMN $^1H$ ($CCl_4$, TMS int) δ (ppm) = 2,0 - 0,8 (56 H, m) ;
RMN $^{119}Sn$ ($C_6D_6$, $(CH_3)_4Sn$ interne) δ = - 162,6 ppm ;

- EXEMPLE 8 :

Préparation et décomposition du bis(acétoxy-2 méthyl-2 éthyl)dibutylétain :

a) - Préparation du bis(acétoxy-2 méthyl-2 éthyl)dibutylétain :

Le mode opératoire est le même qu'à l'exemple 7 dans le cas de l'addition sur le versatate de vinyle ; il est remplacé ici par 2,002 g (0,02 mole) d'acétate d'isopropényle. Le mélange réactionnel est exposé 3 heures 30 aux rayons ultra-violets, à 0 °C. Le produit obtenu quantitativement a la formule suivante :

$(C_4H_9)_2$ Sn $[CH_2CH(CH_3)OCOCH_3]_2$

Caractéristiques spectrales :

RMN $^1H$ ($CCl_4$, TMS int) δ (ppm) = 5,6 - 4,6 (2 H, m) ; 1,95 (6 H, s) ; 1,8 - 0,9 (28 H, m)
RMN $^{119}Sn$ ($C_6D_6$, $(CH_3)_4$ Sn interne) δ = - 24,9 ppm.

b) - Décomposition du bis(acétoxy-2 méthyl-2 éthyl)dibutylétain :

Le produit pur, placé dans un tube à essai, est porté à 80 °C. Au bout d'un quart d'heure la décomposition est terminée. Le diacétate de dibutylétain est obtenu pur. Ses caractéristiques sont indiquées à la fin de l'exemple 1.

- EXEMPLE 9 :

Préparation et décomposition du bis(acétoxy-2 cyano-2 éthyl)dibutylétain :

L'addition du dihydrure de dibutylétain sur l'acétate de cyano-1de vinyle est conduite suivant le mode opératoire de l'exemple 1. L'exposition aux rayons ultra-violets dure 5 heures. Le produit obtenu est identifié comme étant le bis(acétoxy-2 cyano-2 éthyl)dibutylétain, de formule :

$$(C_4H_9)_2\ Sn\ [CH_2CH(CN)OCOCH_3]_2$$

Caractéristiques spectrales :

RMN $^1H$ ($CCl_4$, TMS int) $\delta$ (ppm) = 5,4 (2 H, t) ; 2,1 (6 H, s) ; 1,65 - 0,9 (22 H, m) ;
RMN $^{119}Sn$ ($C_6D_6$, $(CH_3)_4$ Sn interne) $\delta$ = - 22,6 ppm.

b) - Décomposition du bis(acétoxy-2 cyano-2 éthyl)dibutylétain :

La décomposition est faite comme à l'exemple 1 à 110 °C, un mélange de diacétate de dibutylétain et d'acrylonitrile est obtenu au bout de 2 heures, sans trace du produit de départ.

Caractéristiques spectrales de l'acrylonitrile : $H_2C = CH\ CN$

RMN $^1H$ ($CCl_4$, TMS int) $\delta$ (ppm) = 6,4 - 5,4
Pour celles de $(C_4H_9)_2$ Sn $(OCOCH_3)_2$ : voir l'exemple 1.

- EXEMPLE 10 :

Préparation et décomposition du bis(formyloxy-2 éthyl)dibutylétain :

a) - Préparation du formiate de vinyle :

Le mode opératoire suivi est le même que celui de l'exemple 3 pour la préparation du laurate de vinyle. La distillation est faite à l'appareil de Cadiot (colonne à bande tournante de 50 cm). Le produit obtenu a la formule suivante :

$H_2C = CHOCOH$ Eb = 45 °C sous 100 KPa

Caractéristiques spectrales :

RMN $^1H$ ($CCl_4$, TMS int) $\delta$ (ppm) = 8,05 (1 H, s) ; 7,32 (1 H, dd) ; 4,95 (1 H, dd) ; 4,65 (1 H, dd).

b) - Préparation et décomposition du bis(formyloxy-2 éthyl)dibutylétain :

L'addition du dihydrure de dibutylétain sur le formiate de vinyle est faite dans un tube en pyrex® à 30-35 °C en suivant le mode opératoire de l'exemple 5. Le produit n'est pas isolé car il se décompose au fur et à mesure de sa formation.

Seules les caractéristiques spectrales du diformiate de dibutylétain sont mentionnées ici : $(C_4H_9)_2$ Sn $(OCOH)_2$
RMN $^1H$ ($C_6D_6$, TMS int) $\delta$ (ppm) = 8,25 (2 H, s) ; 1,8 - 0,9 (18 H, m) ;
RMN $^{119}Sn$ ($C_6D_6$, $(CH_3)_4$ Sn interne) $\delta$ = - 102,5 ppm.

- EXEMPLE 11 :

Préparation et décomposition du bis(éthoxycarbonyloxy-2 éthyl)dibutylétain :

a) - Préparation du carbonate de vinyle et d'éthyle :

Dans un ballon de 250 $cm^3$ à deux tubulures, sont introduits 6,14 g d'éthanol (0,13 mole), 10,5 g de pyridine et 80 ml de pentane. Sous agitation magnétique, à température ambiante, est ajoutée goutte-à-goutte une solution de 14,2 g (0,13 mole) de chloroformiate de vinyle dans 50 ml de pentane. Le chlorhydrate de pyridinium formé précipite. L'agitation est maintenue 3 heures après la fin de l'addition. Le mélange réactionnel est ensuite repris à l'eau, qui dissout le précipité.

La phase organique est récupérée, lavée avec une solution aqueuse saturée de chlorure de sodium jusqu'à neutralité des eaux de lavage, séchée sur sulfate de magnésium. Le solvant est éliminé par distillation. Le carbonate de vinyle et d'éthyle est distillé ensuite sous 100 KPa à 115 °C.

La formule du produit obtenu est la suivante :

$H_2C = CHOCOOCH_2CH_3$ Eb = 115-116 °C sous 100 KPa

Caractéristiques spectrales :

RMN $^1H$ ($CCl_4$, TMS int) $\delta$ (ppm) = 6,95 (1 H, dd) ; 4,75 (1 H, dd) ; 4,42 (1 H, dd) ; 4,15 (2 H, q) ; 1,3 (3 H, t).

b) -Synthèse du bis(éthoxycarbonyloxy-2 éthyl)dibutylétain :

Le mode opératoire est le même que celui de l'exemple 1. Le temps d'exposition est de 2 heures.

Le produit attendu est obtenu quantitativement :

$$(C_4H_9)_2\ Sn\ (CH_2CH_2OCOOCH_2CH_3)_2$$

Caractéristiques spectrales :

RMN $^1H$ ($CCl_4$, TMS int) $\delta$ (ppm) = 4,3 (4 H, t) ; 4,1 (4 H, q) ; 1,5 - 0,9 (28 H, m).

c) - Décomposition du bis(éthoxycarbonyloxy-2 éthyl)dibutylétain :

Elle est rapide à 20 °C et conduit au diéthoxydibutylétain :

$$(C_4H_9)_2\ Sn\ (OCH_2CH_3)_2.$$

Caractéristiques spectrales :

RMN $^1H$ ($CCl_4$, TMS int) $\delta$ (ppm) = 3,7 (4 H, q) ; 1,5 - 0,9 (24 H, m) ;
RMN $^{119}Sn$ ($C_6D_6$, $(CH_3)_4Sn$ interne) $\delta$ = - 154,5 ppm.

- EXEMPLE 12 :

Préparation et décomposition du bis(acétoxy-2 éthyl)diphénylétain :

a) -Préparation du dihydrure de diphénylétain :

Le mode opératoire suivi est le même que celui utilisé à l'exemple 1 pour la synthèse du dihydrure de dibutylétain. Le produit est fragile ; il nécessite une distillation dans une verrerie propre (rodages non graissés). Celle-ci est faite au kugelrohr, sous un vide de 0,27 KPa, à 100-110 °C (température du four).

b) -Préparation du bis(acétoxy-2 éthyl)diphénylétain :

Dans un tube en pyrex®, contenant du cyclohexane anhydre, sont introduits en quantité stoechiométrique du dihydrure de diphénylétain et de l'acétate de vinyle. Le mélange réactionnel est exposé aux rayons ultraviolets pendant 1 heure à 30 °C. Le solvant est ensuite éliminé sous vide, à température ambiante. Le produit obtenu quantitativement a la formule suivante :

$$(C_6H_5)_2\ Sn\ (CH_2CH_2OCOCH_3)_2$$

Caractéristiques spectrales :

RMN $^1$H ($CCl_4$, TMS int) δ (ppm) = 7,6 - 6,9 (10 H, m) ; 4,75 - 3,7 (4 H, m) ; 1,75 - 0,9 (10 H, m).

c) - Décomposition du bis(acétoxy-2 éthyl)diphénylétain :

La décomposition du produit pur est terminée au bout de 1 heure à 150 °C, et conduit au diacétate de diphénylétain de formule :

$$(C_6H_5)_2\ Sn\ (OCOCH_3)_2$$

Caractéristiques spectrales :

RMN $^1$H ($CCl_4$, TMS int) δ (ppm) = 7,9 - 7,0 (10 H, m) ; 1,8 (4 H, m) ; (6 H, s) ;

- EXEMPLE 13 :

Préparation et décomposition du bis(lauroyloxy-2 éthyl)diphénylétain :

a) - Préparation du bis(lauroyloxy-2 éthyl)diphénylétain :

Le produit est obtenu dans les mêmes conditions que précédemment à l'exemple 12. Le produit a la formule suivante :

$$(C_6H_5)_2\ Sn\ (CH_2CH_2OCOC_{11}H_{23})_2$$

Caractéristiques spectrales :

RMN $^1$H ($CCl_4$, TMS int) δ (ppm) = 7,5 - 6,9 (10 H, m) ; 4,75 - 3,7 (4 H, m) ; 2,2 - 0,75 (50 H, m).

b) - Décomposition du bis(lauroyloxy-2 éthyl)diphénylétain :

Au bout de 1 heure à 150 °C, le produit a disparu ; le dilaurate de diphénylétain est obtenu :

$$(C_6H_5)_2\ Sn\ (OCOC_{11}H_{23})_2$$

Caractérisitiques spectrales :

RMN $^1$H ($CCl_4$, TMS int) δ (ppm) = 7,75 - 7,0 (10 H, m) ; 2,2 - 0,75 (46 H, m) ;

- EXEMPLE 14 :

a) -Préparation du bis(éthoxy-2 éthyl)diobutylétain :

Le mode opératoire suivi est le même qu'à l'exemple 1 sauf que l'acétate de vinyle est remplacé par (0,02 mole) d'éthylate de vinyle.

La solution est placée en tube scellé, sous atmosphère d'azote en présence d'azobisisobutyronitrile (0,01 mole) sous agitation magnétique pendant 5 heures à 80 °C.

On obtient majoritairement le produit de formule :

$$(C_4H_9)_2Sn(CH_2CH_2OCH_2CH_3)_2$$

Caractéristiques spectrales :

RMN $^1$H ($CCl_4$, TMS int) δ (ppm) = 3,5 ppm (8 H, m) 0,9 - 1,6 ppm (28 H, m) ;
RMN $^{119}$Sn δ (ppm) = - 17,7 ppm

b) - Décomposition du bis(éthoxy-2 éthyl)dibutylétain :

La décomposition du produit pur est terminée après 2 heures 30 à 180 °C et conduit au diéthoxydibutylétain

de formule :

$$(C_4H_9)_2Sn(OCH_2CH_3)_2$$

Caractéristiques spectrales :

RMN $^1H$ ($CCl_4$, TMS int) δ (ppm) = 3,7 (4 H, q) ; 1,5 - 0,9 (24 H, m) ;
RMN $^{119}Sn$ ($C_6D_6$, $(CH_3)_4Sn$ interne) δ = - 154,5 ppm.

- EXEMPLES 15 A 17 ET EXEMPLES COMPARATIFS 18 A 21 :

Préparation d'une masse réactionnelle par mélange d'un diol, d'un diisocyanate et d'un composé organostannique :

Réactifs :

- le diol utilisé est un mélange de butanediol-1,4 et de polyéther de masse moléculaire 1 000 dont chaque extrémité de chaîne possède une fonction OH,
- le diisocyanate utilisé est l'IDPI : isocyanato méthyl-3 triméthyl-3,5,5 cyclohexylisocyanate de formule :

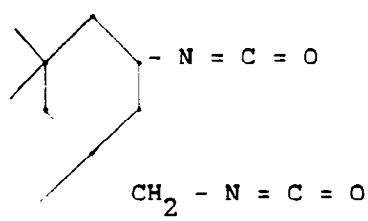

- le composé organostannique est utilisé à raison de 0,03 partie de composés pour 100 parties en masse (d'extraits secs) du diol et de l'IPDI.

Mode opératoire :

Dans une fiole à vide on introduit :
- 5,26 g de polyéther
- 0,8 g de butanediol-1,4

Le mélange est dégazé et on introduit 1 ml d'une solution à 0,15 g de composé organostannique dans 50 ml d'éther anhydre.

Le solvant est évaporé sous vide et on ajoute 3,94 g d'IPDI.

Le mélange réactionnel final est dégazé 2 minutes.

Les exemples 15 à 21 utilisent le même mélange réactionnel. La nature du composé organostannique pour chacun de ces exemples est le suivant :

exemple 15 :

- bis(acétoxy-2 éthyl)dibutylétain préparé à l'exemple 1.

exemple 16 :

- bis(lauroyloxy-2 éthyl)dibutylétain prépare à l'exemple 3.

exemple 17 :

- bis [(éthyl-2 hexanoyloxy-)- 2 éthyl] dibutylétain préparé à l'exemple 5.

exemple 18 :

- témoin sans composé organostannique.

exemple 19 :

- diacétate de dibutylétain.

exemple 20 :

- dilaurate de dibutylétain.

exemple 21 :

- di(éthyl-2 hexanoate)dibutylétain.

Le mélange réactionnel de chaque exemple est divisé en trois lots.

Sur le premier lot on mesure le temps de gélification (durée de "vie en pot") à température ambiante (20 °C) et sur les deuxième et troisième lots on mesure le temps de réticulation, respectivement à 100 °C et à 140 °C.

Les résultats obtenus sont rassemblés dans le tableau ci-après.

TABLEAU

| Exemples | 15 | 16 | 17 | 18 | 19 | 20 | 21 |
|---|---|---|---|---|---|---|---|
| Durée de vie en pot (à 20 °C) | 8 h | 8 h | 7 h 30 mn | 8 h | 55 mn | 1 40 mn | 1 h 50 |
| Temps de réticulation à 100 °C | 8 mn | 8 mn 30s | 8 mn | - | 4 mn | 5 mn | 5 mn |
| Temps de réticulation à 140 °C | 5 mn | 5 mn | 5 mn 30 s | - | 3 mn | 3 mn | 3 mn |

Du tableau ci-dessus il apparaît que les masses réactionnelles ont la même durée de "vie en pot" avec un catalyseur latent de l'invention (exemples 15 à 17) et sans composé organo-stannique (témoin exemple 18).

La durée de réticulation des masses réactionnelles est légèrement plus longue mais du même ordre de grandeur quand on utilise un catalyseur latent de l'invention que lorsque l'on utilise directement son produit de dégradation thermique correspondant (exemples 19 à 21).

## Revendications

1. Composés d'étain (IV) tétracoordinés de formule générale :

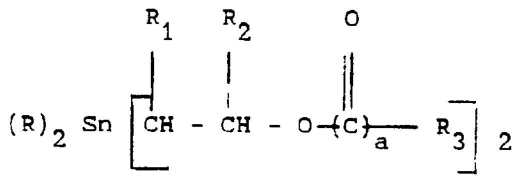

(1)

dans laquelle :

- les radicaux R, identiques ou différents, sont choisis parmi un radical alkyle linéaire ou ramifié en $C_1$-$C_{20}$, un radical aryle mononucléaire, arylalkyle et alkylaryle, dont la partie alkyl est en $C_1$-$C_6$,
- les radicaux $R_1$ et $R_2$, identiques ou différents, sont choisis parmi un atome d'hydrogène, un radical cyano, un radical alkyle en $C_1$-$C_6$, un radical alcoxycarbonyle dont la partie alkyle est en $C_1$-$C_6$, et $R_1$ et $R_2$ peuvent former ensemble un cycle hydrocarboné saturé ayant de 5 à 8 atomes de carbone,
- le radical $R_3$ est choisi parmi un atome d'hydrogène, un radical alkyle en $C_1$-$C_{20}$ linéaire ou ramifié, un radical alcoxy en $C_1$-$C_{20}$ linéaire ou ramifié, un radical aryle mononucléaire et un radical aryloxy mononucléaire,
- a = 0 ou 1.

**2.** Composés d'étain (IV) selon la revendication 1, caractérisés en ce que :

- R est choisi parmi les radicaux butyle, octyle et phényle,
- $R_1$ est l'atome d'hydrogène,
- $R_2$ est choisi parmi l'atome d'hydrogène, les radicaux méthyle et cyano,
- $R_3$ est choisi parmi l'atome d'hydrogène, les radicaux méthyle, éthyl-2 pentyle, nonyle, undécanoyle, méthoxy et éthoxy,
- a = 1.

**3.** Composés d'étain (IV) selon la revendication 1, choisis parmi :

- bis(acétoxy-2 éthyl) dibutylétain, formule (1) : R = butyle, $R_1 = R_2 = H$, $R_3$ = méthyle,
- bis(acétoxy-2 éthyl) dioctylétain, formule (1) : R = octyle, $R_1 = R_2 = H$, $R_3$ = méthyle,
- bis(lauroyloxy-2 éthyl) dibutylétain, formule (1) : R = butyle, $R_1 = R_2 = H$, $R_3$ = undécanoyle,
- bis(lauroyloxy-2 éthyl)dioctylétain, formule (1) : R = octyle, $R_1 = R_2 = H$, $R_3$ = undécanoyle,
- bis [(éthyl-2 hexanoyloxy)-2 éthyl] dibutylétain, formule (1) : R = butyle, $R_1 = R_2 = H$, $R_3$ = éthyl-2 pentyle,
- bis [(éthyl-2 hexanoyloxy)-2 éthyl] dioctylétain, formule (1) : R = octyle, $R_1 = R_2 = H$, $R_3$ = éthyl-2 pentyle,
- bis(décanoyloxy-2 éthyl) dibutylétain, formule (1) : R = butyle, $R_1 = R_2 = H$, $R_3$ = nonyle (dont le carbone en position 1 est quaternaire),
- bis(acétoxy-2 méthyl-2 éthyl) dibutylétain, formule (1) : R = butyle, $R_1 = H$, $R_2 = R_3$ = méthyle,
- bis(acétoxy-2 cyano-2 éthyl) dibutylétain, formule (1) : R = butyle, $R_1 = H$, $R_2 = CN$, $R_3$ = méthyle,
- bis(formyloxy-2 éthyl) dibutylétain, formule (1) : R = butyle, $R_1 = R_2 = R_3 = H$,
- bis(éthoxycarbonyloxy-2 éthyl) dibutylétain, formule (1) : R = butyle, $R_1 = R_2 = H$, $R_3$ = éthoxy,
- bis(acétoxy-2 éthyl) diphénylétain, formule (1) : R = phényle, $R_1 = R_2 = H$, $R_3$ = méthyle,
- bis(lauroyloxy-2 éthyl) diphénylétain, formule (1) : R = phényle, $R_1 = R_2 = H$, $R_3$ = undécanoyle.

**4.** Procédé de préparation de composés d'étain (IV) tels que définis à l'une quelconque des revendications précédentes par réaction d'hydrostannation d'un dihydrure de diorganoétain de formule (2) :

$$(R)_2\,Sn\,H_2 \qquad (2)$$

dans laquelle les radicaux R, identiques ou différents, ont la même signification qu'à la formule (1) ci-dessus sur un carboxylate ou un alcoolate d'énol de formule (3) :

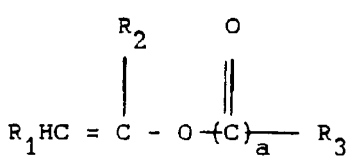

(3)

dans laquelle les radicaux $R_1$, $R_2$ et $R_3$ et a ont la même signification qu'à la formule (1) ci-dessus.

5. Procédé de décomposition thermique des composés tels que définis à l'une quelconque des revendications 1 à 3, caractérisé en ce qu'on chauffe lesdits composés jusqu'à l'obtention du diorganodicarboxylate ou diorganodialcoolate d'étain (IV) de formule :

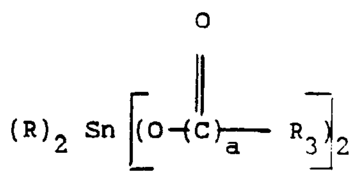

dans laquelle R, $R_3$ et a ont la même signification qu'à la formule (1).

6. Procédé selon la revendication 5, caractérisé en ce qu'on ajoute une quantité efficace d'un agent nucléophile choisi parmi l'eau, une amine organique secondaire, un alcool organique, un composé organosilicié à fonction silanol et un composé organique à fonction mercapto (SH).

7. Utilisation d'un composé tel que défini à l'une quelconque des revendications 1 à 3 comme catalyseur de préparation de polyuréthanne par réaction d'un polyisocyanate organique sur un composé organique contenant au moins deux groupes à hydrogène actif et déclenchement de la catalyse de la réaction par chauffage du mélange réactionnel à une température au moins égale à la température de décomposition du catalyseur.

## Patentansprüche

1. Tetrakoordinierte Zinn(IV)-Verbindungen der allgemeinen Formel:

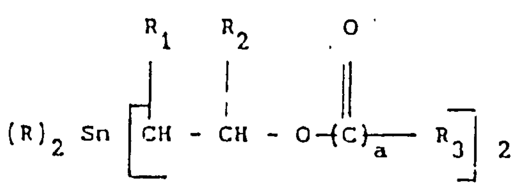

(1)

worin
- die Reste R, gleich oder verschieden, ausgewählt sind aus einer gerad- oder verzweigtkettigen $C_1$-$C_{20}$-Alkylgruppe, einer monocyklischen Aryl-, Aralkyl- und Alkaryl-Gruppe, deren Alkylteil eine $C_1$-$C_6$-Gruppe ist,
- die Reste $R_1$ und $R_2$, gleich oder verschieden, ausgewählt sind aus einem Wasserstoffatom, einer Cyanogruppe, einer $C_1$-$C_6$-Alkylgruppe, einer Alkoxycarbonylgruppe, deren Alkylteil eine $C_1$-$C_6$-Gruppe ist, und worin $R_1$ und $R_2$ zusammen einen gesättigten Kohlenwasserstoffring mit 5 bis 8 Kohlenstoffatomen bilden können,
- der Rest $R_3$ ausgewählt ist aus einem Wasserstoffatom, einer gerad- oder verzweigtkettigen $C_1$-$C_{20}$-Alkylgruppe, einer gerad-oder verzweigtkettigen $C_1$-$C_{20}$-Alkoxygruppe, einer monocyklischen Arylgruppe und einer monocyklischen Aryloxygruppe, a = 0 oder 1 ist.

2. Zinn(IV)-Verbindungen gemäß Anspruch 1, dadurch gekennzeichnet, daß
R ausgewählt ist aus den Gruppen Butyl, Octyl und Phenyl,
$R_1$ ein Wasserstoffatom ist,
$R_2$ ausgewählt ist aus dem Wasserstoffatom, den Gruppen Methyl und Cyano,
$R_3$ ausgewählt ist aus dem Wasserstoffatom, den Gruppen Methyl, 2-Ethyl-pentyl, Nonyl, Undecanoyl, Methoxy und Ethoxy, a = 1 ist.

3. Zinn(IV)-Verbindungen gemäß Anspruch 1 ausgewählt aus
Bis(2-Acetoxy-ethyl)-dibutylzinn der Formel (1) mit R = Butyl, $R_1$ = $R_2$ = H, $R_3$ = Methyl

Bis(2-Acetoxy-ethyl)-dioctylzinn der Formel (1) mit R = Octyl, $R_1$ = $R_2$ = H, $R_3$ = Methyl,
Bis(2-Lauroyloxy-ethyl)-dibutylzinn der Formel (1) mit R = Butyl, $R_1$ = $R_2$ = H, $R_3$ = Undecanoyl,
Bis(2-Lauroyloxy-ethyl)-dioctylzinn der Formel (1) mit R = Octyl, $R_1$ = $R_2$ = H, $R_3$ = Undecanoyl,
Bis[2-(2-Ethyl-hexanoyloxy)ethyl]-dibutylzinn der Formel (1) worin R = Butyl, $R_1$ = $R_2$ = H, $R_3$ = 2-Ethylpentyl,
Bis[2-(2-Ethyl-hexanoyloxy)ethyl]-dioctylzinn der Formel (1) mit R = Octyl, $R_1$ = $R_2$ = H, $R_3$ = 2-Ethyl-pentyl,
Bis(2-decanoyloxy-ethyl)-dibutylzinn der Formel (1) mit R = Butyl, $R_1$ = $R_2$ = H, $R_3$ = Nonyl (dessen Kohlenstoffatom in 1-Stellung quartär ist),
Bis(2-Acetoxy-2-methyl-ethyl)-dibutylzinn der Formel (1) mit R = Butyl, $R_1$ = H, $R_2$ = $R_3$ = Methyl,
Bis(2-Acetoxy-2-cyano-ethyl)-dibutylzinn der Formel (1) mit R = Butyl, $R_1$ = H, $R_2$ = CN, $R_3$ = Methyl,
Bis(2-Formyloxy-ethyl)-dibutylzinn der Formel (1) mit R = Butyl, $R_1$ = $R_2$ = $R_3$ = H,
Bis(2-Ethoxy-carbonyloxy-ethyl)-dibutylzinn der Formel (1) mit R = Butyl, $R_1$ = $R_2$ = H, $R_3$ = Ethoxy,
Bis(2-Acetoxy-ethyl)-diphenylzinn der Formel (1) mit R = Phenyl, $R_1$ = $R_2$ = H, $R_3$ = Methyl,
Bis(2-Lauroyloxy-ethyl)-diphenylzinn der Formel (1) mit R = Phenyl, $R_1$ = $R_2$ = H, $R_3$ = Undecanoyl.

4. Verfahren zur Herstellung von Zinn(IV)-Verbindungen gemäß einem der vorstehenden Ansprüche durch Hydrostannierungsreaktion eines Diorganozinndihydrids der Formel (2):

$$(R)_2\,Sn\,H_2 \qquad (2)$$

worin die Reste R, gleich oder verschieden, die gleiche Bedeutung wie in der vorstehend angegebenen Formel (1) besitzen, mit einem Carbonsäureester oder einem Alkoholat eines Enols der Formel (3)

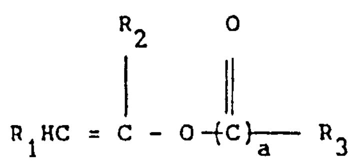

(3)

worin die Reste $R_1$, $R_2$ und $R_3$ und a dieselbe Bedeutung wie in der vorstehenden Formel (1) besitzen.

5. Verfahren zur thermischen Zersetzung der Verbindungen gemäß einem der Ansprüche 1 bis 3, dadurch gekennzeichnet, daß man diese Verbindungen bis zum Erhalt eines Zinn(IV)-Diorganodicarboxylats oder -Diorganodialkoholats der Formel:

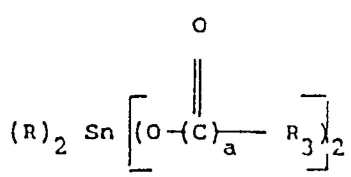

erhitzt, worin R, $R_3$ und a dieselbe Bedeutung besitzen wie in der Formel (1).

6. Verfahren gemäß Anspruch 5, gekennzeichnet durch Zugabe einer wirksamen Menge eines nukleophilen Agens ausgewählt aus Wasser, einem sekundären organischen Amin, einem organischem Alkohol, einer Organosiliziumverbindung mit Silanolfunktion und einer organischen Verbindung mit Merkaptofunktion (SH).

7. Verwendung einer Verbindung gemäß einem der Ansprüche 1 bis 3 als Katalysator bei der Polyurethanherstellung durch Umsetzung eines organischen Polyisocyanats mit einer organischen Verbindung, die mindestens zwei Gruppen mit aktivem Wasserstoff enthält und Auslösung der Katalysereaktion durch Erhitzen des Reaktionsgemisches auf eine Temperatur, die mindestens der Zersetzungstemperatur des Katalysators entspricht.

## Claims

1. Tetracoordinated tin(IV) compounds of general formula:

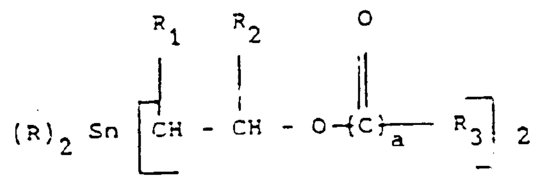

(1)

in which:
- the radicals R, which are identical or different, are chosen from a $C_1$-$C_{20}$ linear or branched alkyl radical, a mononuclear aryl, arylalkyl and alkylaryl radical in which the alkyl part is $C_1$-$C_6$,
- the radicals $R_1$ and $R_2$, which are identical or different, are chosen from a hydrogen atom, a cyano radical, a $C_1$-$C_6$ alkyl radical, an alkoxycarbonyl radical in which the alkyl part is $C_1$-$C_6$, and $R_1$ and $R_2$ together can form a saturated hydrocarbon ring containing from 5 to 8 carbon atoms,
- the radical $R_3$ is chosen from a hydrogen atom, a linear or branched $C_1$-$C_{20}$ alkyl radical, a linear or branched $C_1$-$C_{20}$ alkoxy radical, a mononuclear aryl radical and a mononuclear aryloxy radical,
- a = 0 or 1.

2. Tin(IV) compounds according to Claim 1, characterised in that:
- R is chosen from butyl, octyl and phenyl radicals,
- $R_1$ is the hydrogen atom,
- $R_2$ is chosen from the hydrogen atom, the methyl and cyano radicals,
- $R_3$ is chosen from the hydrogen atom, the methyl, 2-ethylpentyl, nonyl, undecanoyl, methoxy and ethoxy radicals,
- a = 1.

3. Tin(IV) compounds according to Claim 1, chosen from:
- bis(2-acetoxyethyl)dibutyltin, formula (1): R = butyl, $R_1 = R_2$ = H, $R_3$ = methyl,
- bis(2-acetoxyethyl)dioctyltin, formula (1): R = octyl, $R_1 = R_2$ = H, $R_3$ = methyl,
- bis(2-lauroyloxyethyl)dibutyltin, formula (1): R = butyl, $R_1 = R_2$ = H, $R_3$ = undecanoyl,
- bis(2-lauroyloxyethyl)dioctyltin, formula (1): R = octyl, $R_1 = R_2$ = H, $R_3$ = undecanoyl,
- bis[2-(2-ethylhexanoyloxy)ethyl]dibutyltin, formula (1): R = butyl, $R_1 = R_2$ = H, $R_3$ = 2-ethylpentyl,
- bis[2-(2-ethylhexanoyloxy)ethyl]dioctyltin, formula (1): R = octyl, $R_1 = R_2$ = H, $R_3$ = 2-ethylpentyl,
- bis(2-decanoyloxyethyl)dibutyltin, formula (1): R = butyl, $R_1 = R_2$ = H, $R_3$ = nonyl (in which the carbon in position 1 is quaternary),
- bis(2-acetoxy-2-methylethyl)dibutyltin,formula (1): R = butyl, $R_1$ = H, $R_2 = R_3$ = methyl,
- bis(2-acetoxy-2-cyanoethyl)dibutyltin, formula (1): R = butyl, $R_1$ = H, $R_2$ = CN, $R_3$ = methyl,
- bis(2-formyloxyethyl)dibutyltin, formula (1): R = butyl, $R_1 = R_2 = R_3$ = H,
- bis ( 2-ethoxycarbonyloxyethyl ) dibutyltin, formula (1): R = butyl, $R_1 = R_2$ = H, $R_3$ = ethoxy,
- bis(2-acetoxyethyl)diphenyltin, formula (1): R = phenyl, $R_1 = R_2$= H, $R_3$ = methyl,
- bis(2-lauroyloxyethyl)diphenyltin, formula (1): R = phenyl, $R_1 = R_2$ = H, $R_3$ = undecanoyl.

4. Process for the preparation of tin(IV) compounds as defined in any one of the preceding claims, by hydrostannation reaction of a diorganotin dihydride of formula (2):

$$R_2SnH_2 \qquad (2)$$

in which the radicals R, which are identical or different, have the same meaning as in formula (1) above with an enol carboxylate or alcoholate of formula (3):

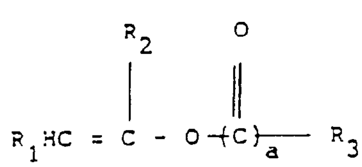

(3)

in which the radicals $R_1$, $R_2$ and $R_3$ and a have the same meaning as in formula (1) above.

**5.** Process for thermal decomposition of the compounds as defined in any one of Claims 1 to 3, characterised in that the said compounds are heated until tin(IV) diorganodicarboxylate or diorganodialcoholate is obtained, of formula:

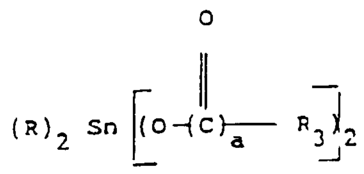

in which R, $R_3$ and a have the same meaning as in formula (1).

**6.** Process according to Claim 5, characterised in that an effective quantity of a nucleophilic agent is added, which is chosen from water, a secondary organic amine, an organic alcohol, an organosilicon compound containing a silanol functional group and an organic compound containing a mercapto (SH) functional group.

**7.** Use of a compound as defined in any one of Claims 1 to 3 as catalyst for the preparation of polyurethane by reaction of an organic polyisocyanate with an organic compound containing at least two groups containing active hydrogen, and triggering the catalysis of the reaction by heating the reaction mixture to a temperature at least equal to the decomposition temperature of the catalyst.